**Europäisches Patentamt**

**European Patent Office**

**Office européen des brevets**

(19)

(11) Veröffentlichungsnummer: **0 122 626**
**B1**

(12) ## EUROPÄISCHE PATENTSCHRIFT

(45) Veröffentlichungstag der Patentschrift:
03.02.88

(51) Int. Cl.⁴: **H 04 N 5/76,** G 06 K 9/18,
G 11 B 15/00

(21) Anmeldenummer: **84104230.2**

(22) Anmeldetag: **13.04.84**

(54) Einrichtung zum zeit- oder ereignisgesteuerten Aufzeichnen von Fernsehprogrammsignalen.

(30) Priorität: **15.04.83 DE 3313799**

(43) Veröffentlichungstag der Anmeldung:
**24.10.84 Patentblatt 84/43**

(45) Bekanntmachung des Hinweises auf die Patenterteilung:
**03.02.88 Patentblatt 88/5**

(84) Benannte Vertragsstaaten:
**AT BE FR GB IT NL**

(56) Entgegenhaltungen:
**GB-A-2 126 002**

**ELEKTRONIK, Band 32, Nr. 15, Juli 1983, München;
"Fernsehprogramm aus dem Balkencode", Seiten
14,16**

(73) Patentinhaber: **IRT Inventions Research
Technology Patent- Holding AG, Stadthausquai 5,
CH- 8001 Zürich (CH)**

(72) Erfinder: **Heller, Arthur, Dipl.- Ing., Waldstrasse 44,
D-8059 Eichenried (DE)**

(74) Vertreter: **Haft, Berngruber, Czybulka, Hans-
Sachs- Strasse 5, D-8000 München 5 (DE)**

**Beschreibung**

Die Erfindung bezieht sich auf eine Einrichtung gemäß dem Oberbegriff des Patentanspruchs.

Um die Vorprogrammierung von Videorecordern für die Aufzeichnung ausgewählter Programmbeiträge zu vereinfachen, ist es bekannt, die Anfangszeit und die Dauer jedes Programmbeitrages in codierter Form, z. B. mittels eines optisch auslesbaren Strichcodes, aus Programmankündigungsmedien zu entnehmen und als Sollwert in die Schaltuhr eines Videorecorders einzugeben. Eine derartige zeitgesteuerte Aufzeichnung führt jedoch zu Fehlaufzeichnungen, wenn zeitliche Programmverschiebungen eintreten oder kurzfristige Programmänderungen erfolgen. Als Abhilfe wurde deshalb bereits vorgeschlagen, zusammen mit dem Fernsehsignal für jeden Programmbeitrag ein entsprechendes Identifiaktionssignal (Label) als Istwert zu übertragen. Um eine deratige ereignisgesteuerte Aufzeichnung mit der bekannten zeitgesteuerten Aufzeichnung kompatibel zu machen, beispielsweise um eine schrittweise Einführung der Ereignissteuerung zu ermöglichen, wurde ferner vorgeschlagen, als Information des Identifiaktionssignals die angekündigte Anfangszeit (einschließlich Kalenderdatum) des betreffenden Programmbeitrages in der gleichen Codierung wie bei der zeitgesteuerten Aufzeichnung zu verwenden. Eine solche kompatible, ereignisgesteuerte Aufzeichnung ermöglicht jedoch nur dann ohne weiteres die automatische Aufzeichnung von zeitlich gegenüber der Vorankündigung vorschobenen Programmbeiträgen, wenn diese Zeitverschiebung innerhalb des angekündigten Kalendertages erfolgt. Wird ein Beitrag über den zunächst angekündigten Tag hinaus verschoben, so kann er nur dann automatisch aufgezeichnet werden, wenn hierfür eine neue Ankündigung erfolgt und diese Information neu eingespeichert wird.

Im Falle eines kurzfristig angekündigten Austausches eines früher angekündigten Programmbeitrages gegen einen anderen Programmbeitrag tritt die weitere Schwierigkeit auf, daß die Austauschankündigung bei Programmzeitschriften mit relativ frühem Redaktionsschluß u.U. nicht mehr berücksichtigt werden kann. Dies führt dazu, daß die Abonnenten derartiger Programmzeitschriften in einem solchen Falle Fehlaufzeichnungen erhalten. Um derartige Fehlaufzeichnungen zu vermeiden, müßte mit dem Fernsehsignal anstelle des Zeitdatum-Istwertes ein Ausfall-Kennungssignal übertragen werden, welches jedoch jedwede Aufzeichnung unterbindet, d.h., auch bei Abonnenten von Programmzeitschriften, welche die Programmänderung in ihren Codeausdrücken an sich noch berücksichtigen könnten.

Die Aufgabe der Erfindung besteht darin, eine Einrichtung dereingangs erwähnten Art zu schaffen, welche im Falle der Programmierung des später nicht gesendeten Programmbeitrages eine Fehlaufzeichnung zu dem programmierten Zeitpunkt vermeidet und dennoch im Falle der Programmierung des dafür eingesetzten Austauschbeitrages, z. B. aus einer aktuelleren Programmzeitschrift, eine automatische Aufzeichnung ermöglicht.

Die Aufgabe wird erfindungsgemäß durch die kennzeichnenden Merkmale des Patentanspruchs gelöst.

Die Erfindung wird nachstehend anhand der Zeichnungen näher erläutert. Es zeigt:

Fig. 1 anhand einer Tabelle den Zusammenhang zwischen der Programmankündigungsvorgeschichte, den Austausch- bzw. Ausfallinformationen im Ankündigungsmedium bzw. Fernsehsignal und den Recorderfunktionen bei der erfindungsgemäßen Einrichtung,

Fig. 2 ein Blockschaltbild einer Ausführungsform der erfindungsgemäßen Auswerteeinrichtung in einem Videorecorder.

Die Tabelle der Fig. 1 bezieht sich zunächst auf die Betriebsart "Ereignissteuerung", setzt also voraus, daß mit dem Fernsehprogrammsignal als sogenanntes "Label" in der Regel das Zeitdatum des prognostizierten Beitragsbeginns mit ausgesendet wird.

**Beispiel für den Normalfall der Zeile I in Fig. 1:**

Nach Erscheinen der Programmzeitschrift sei über deren Strichcode die Zeitdatums-Sollinformation "7. April, 18.15" (ergänzt um eine codierte Programmquellenangabe z. B. "BR-Regional") in den Sollspeicher 310 eingelesen worden. Es trete ab Erstankündigung keine Programmänderung für diesen Zeitpunkt und diesen Kanal mehr ein. Dann veranlaßt das Auftreten des Labels "7. April, 18.15, BR-Regional" als Dateninformation in jenem Empfangskanal, von dem die Steuerlogik weiß, daß er BR-Regional bringt, eine ereignisgesteuerte Aufzeichnung. Beginnt die besagte Sendung beispielsweise erst um 18.21, so tritt eben zu diesem Zeitpunkt das angekündigte und damit verabredete Label auf und bleibt so lange z. B. in der Datenzeile des Fernsehprogrammsignals präsent, wie diese Sendung andauert. Solange das Label anliegt, wird aufgezeichnet. Das Programmereignis selbst steuert also statisch die gewünschte Aufzeichnung, unabhängig von einer Verspätung, Unterbrechung oder auch einer Überziehung.

**Beispiel für Zeile II Fig. 1:**

Aus irgendeinem Grund werde die eingespeicherte Sendung ersatzlos gestrichen (z.

B. letzte Sendung des Tages) bzw. ohne jede Vorankündigung in den Programmzeitschriften kurzfristig durch eine andere ersetzt. In diesem Fall wird anstatt der Zeitdatums-Sollinformation (=Label) eine verabredete Pseudo-Zeitdatumsinformation (z. B. Tag 0, Monat 15, Stunde 28, Minute 63 = Pseudolabel A) als Ausfallerkennungssignal im Datenkanal des Fernsehsignals ausgegeben. Die Steuerlogik der Auswerteeinrichtung 3 wertet diese Information dahingehend aus, daß eine Aufzeichnung unterbleibt. Damit wird definitiv eine Fehlaufzeichnung vermieden.

### Beispiel für Zeile III, Fig. 1:

Die von einer frühzeitig erscheinenden Programmzeitschrift angekündigte und von einigen Recorderbesitzern eingespeicherte Pop-Sendung "7. April, 18.15, BR-Regional" werde etwa eine Woche vor Sendetermin aus der Programmplanung herausgenommen und dafür eine aktuelle Sportsendung angekündigt. Letztere Ankündigung findet sich beispielsweise im Strichcode einer aktuelleren Programmzeitschrift.

### Zeile IIIA, Fig. 1:

Die Steuerlogik der Auswerteeinrichtung 3 in den Recordern von Abonnenten der (zu) früh erscheinenden Programmzeitschrift findet am 7. April um 18.15 "überraschend" nicht das korrespondierende "Label" im Fernsehsignal vor, sondern stattdessen das Ausfallerkennungssignal. Die richtige Reaktion zur Vermeidung einer Fehlaufzeichnung (Sport statt Pop): die Aufzeichnung unterbleibt.

### Zeile IIIB, Fig. 1:

Sportbegeisterte Abonnenten einer aktuelleren Programmzeitschrift haben ihre Recorder für den 7. April, 18.15, BR-Regional durch Übernahme der entsprechenden aktuellen Strichcodeinformation programmiert. In diesem Strichcode war nun aber das Austauschkennungsbit gesetzt, was stets bei der Neuankündigung eines Austauschbeitrages für einen zuvor angekündigten, anderen Beitrag erfolgen muß. Die Steuerlogik der Auswerteeinrichtung erkennt aus dem gesetzten Austauschkennungsbit, daß sie zum angekündigten Zeitpunkt im betreffenden Fernsehsignal kein echtes Zeitdatumslabel sondern das Pseudolabel als Ausfallerkennungssignal erwarten kann. Eine ereignisgesteuerte Aufzeichnung ist damit unmöglich. Stattdessen ist für diesen Fall eine zeitgesteuerte Aufzeichnung vorgesehen und wird über die Kalenderuhr 350 ausgelöst. Zwar ist eine solche Aufzeichnung gegen verspätete Ausstrahlung etc. nicht gefeit, aber immerhin wird mit großer Wahrscheinlichkeit der Benutzer den gewünschten Beitrag auf seinem Band vorfinden, da es ja unwahrscheinlich ist, daß eine schon einmal geänderte Programmankündigung ein zweites Mal geändert wird.

Zu den in Fig. 1 dargestellten drei Zeilen bzw. Fallgestaltungen ist anzumerken, daß eine theoretisch denkbare vierte Zeile mit der Konstellation: Austauschkennungsbit "gesetzt", aber Ausfallerkennungssignal "nicht vorhanden", unplausibel wäre und daher als Datenübertragungsfehler behandelt würde.

In Fig. 2 ist eine Fernsehempfangseinrichtung mit einem Tuner 1 und einem Demodulator 2 dargestellt, welche eine Auswerteeinrichtung 3 aufweist und eine als Videorecorder bezeichnete Aufzeichnungseinrichtung für Fernsehsignale steuert. Die anhand eines Blockschaltbildes in Fig. 2 angedeutete Auswerteeinrichtung enthält eine ralativ komplexe Steuerlogik, wie sie vorzugsweise unter Verwendung von Microcomputern realisiert wird, wobei die sogenannte "Systemintelligenz" durch Programmierung festgelegt und eingegeben wird. Um die Blockdarstellung nicht unnötig zu verkomplizieren, wurde die in Wirklichkeit zentrale "intelligente Steuerlogik" aufgespaltet und an jenen Stellen als Block "Logik" (333a-c) eingefügt, wo deren Eingriff auf Signalflüsse, Schalterstellungen etc. funktional plausibel ist. Der zugeführte Pfeil mit dem Index I soll die Einflußnahme einer übergeordneten zentralen Intelligenz zur richtigen Zeit als Funktion der richtigen Parameter und ihrer Verknüpfung (sh. auch Fig.1) andeuten.

Der Tuner 1 erhält an seinem Antenneneingang 11 die modulierten Fernsehsignale und an seinem Eingang 12, gesteuert durch die "Systemintelligenz" über die Logik 333a, zur richtigen Zeit die richtige Kanalinformation 33, die seine Abstimmung auf einen besimmten Empfangskanal bewerkstelligt. Der nachgeschaltete Demodulator 2 einschließlich ZF-Verstärker liefert an seinem Ausgang im Basisband das Programm-Videosignal 32 zusammen mit den dort in einer Datenzeile enthaltenen zusätzlichen Informationen. (Zeitdatumssollwert - Label bzw. Pseudo-Label). Selbstverständlich wird das demodulierte Videosignal 32 ebenso wie das entsprechende Tonsignal zunächst den Aufzeichnungskanälen 42 bzw. 43 des Videorecorders 4 zugeführt. In einem Datendecoder 320 werden darüber hinaus die zur Recordersteuerung dienenden Zusatzinformationen aus einer Datenzeile (z. B. Zeile sechzehn der 625-Zeilen-Norm) ausselektiert und aufbereitet. Außer dem bereits erwähnten regulären Label am Ausgang 321 und dem decodierten Pseudolabel A "Ausfallerkennungssignal" am Ausgang 323 wird vom Datendecoder 320 am Ausgang 322 eine Betriebsarteninformation abgegeben. Die

"Systemintelligenz" (333c) muß ja "wissen", ob Zeitsteuerung oder Ereignissteuerung vorliegt. Fehlt die Datenzeileninformation im Videosignal 32 ganz oder liegt ein Pseudolabel B vor (z. B. Tag 0, Monat 15, Stunde 31, Minute 63), welches verabredungsgemäß verneint, daß der angewählte Kanal reguläre Labels zur Ereignissteuerung aussendet, so erfährt das System vom Ausgang 322, daß es sich mit reiner Zeitsteuerung per Schaltuhr begnügen muß.

Am Ausgang 321 des Datendecoders steht bei Vorliegen der Betriebsart "Ereignissteuerung" das reguläre Label als statischer Istwert für den später beschriebenen Soll-Ist-Vergleich zur Verfügung. Bei Betriebsart "Zeitsteuerung" dient der Ausgang 351 einer Realzeit-Kalenderuhr 350 als dynamischer Istwert für den Realzeitvergleich. Freilich wird die Realzeit- und Datumsinformation vom Ausgang 351 auch von der Systemintelligenz (333c) für das Abwickeln der Betriebsart "Ereignissteuerung" benötigt, um z. B. den Recorder am richtigen Tag rechtzeitig vor dem angekündigten Beitragsbeginn zum "Lauern" auf das Auftreten des vorprogrammierten Labels "scharfzumachen".

Bisher wurde die Auswerteeinrichtung 3 im Hinblick auf die Bereitstellung der Istwerte für den Vergleicher 340 an dessen Instwerteingang 341 beschrieben. Der folgende Teil behandelt die Eingabe, Speicherung und Auswertung der Sollwertinformation.

Als Informationsträger für den Sollwert einer Beitragsankündigung ist im Beispiel der Fig. 2 ein in einer Programmzeitschrift 5 jedem Beitrag zugeordneter Strichcode 51 angenommen, dessen Inhalt über eine Sensoreinrichtung 52 dem Eingang 31 der Auswerteeinrichtung 3 zugeliefert und einem Sollwertspeicher 310 über dessen Sollwerteingang 342 zugeführt und dort gespeichert wird. In der Regel wird ein solcher Speicher 310 für die Speicherung einer Mehrzahl von Sollwerten, also Aufzeichnungswünschen ausgelegt sein.

Das codierte Zeitdatum des vorgesehenen Beitragsbeginns (Tag, Monat, Stunde, Minute) sei im Beispiel der Fig. 2 am Ausgang 311, die codierte Programmquellenangabe am Ausgang 313 und schließlich das Austauschkennungsbit an der Ausgangsleitung 312 des Speichers 310 verfügbar. Selbstverständlich ist die "Systemintelligenz" trotz keines disbezüglichen zeichnerischen Hinweises vorrangig auch mit der Abwicklung der Speicherein- und Auslesevorgänge befaßt. (Bisher noch nicht erwähnt wurde ein weiterer Informationsbestandteil des Strichcodes nämlich die prognostizierte Zeitdauer oder stattdessen auch Endzeit des angekündigten Beitrags, welche für die reine zeitgesteuerte Betriebsart benötigt wird und am Ausgang 314 verfügbar ist. Sie veranlaßt die Logik 333b dann zum zeitgesteuerten Beenden einer Aufzeichnung).

### Funktionskurzbeschreibung Betriebsart Zeitsteuerung

Ein Aufzeichnungswunsch, gespeichert im Sollspeicher 310 bewirkt zu gegebener Zeit über die Logik 333a die Einstellung jenes Tunerkanals, auf welchem die Programmquelle entsprechend ihrem Code am Speicherausgang 313 sendet. Da dieser Kanal nun keine Dateninformation bzw. das Pseudolabel B aussendet, liegt Betriebsart Zeitsteuerung vor. Die Logik (333c) bringt deshalb den Umschalter S in die in Fig. 2 rechts gezeichnete Stellung, der Vergleicher 340 gibt am Gleichheitsausgang 344 dann ein Ausgangssignal ab, wenn der Realzeitsollwert vom Speicherausgang 311 gleich ist dem Realzeitistwert am Ausgang 351 der Kalenderuhr. Die Logik (333b) speichert dieses kurzzeitige Koinzidenzsignal und steuert über die Ausgangsleitung 36 die Aufzeichnungsfunktion des Recorders 4 über dessen Steuereingang 41 und zwar so lange, wie es die Dauer- bzw. Endzeitinformation aus dem Speicherausgang 314 angibt. Nach Ablauf der prognostizierten Dauer bzw. Erreichen der prognostizieren Endzeit wird die Aufzeichnung gestopt (auch wenn z. B. der Beitrag wegen berziehung noch andauert).

### Funktionskurzbeschreibung Betriebsart Ereignissteuerung

Ein Aufzeichnungswunsch, gespeichert im Sollspeicher 311 bewirkt zu gegebener Zeit über die Logik 333a die Einstellung des Tunerkanals, auf welchem die Programmquelle entsprechend ihrem Code am Speicherausgang 313 sendet. Dieser Kanal bringt zunächst irgendein reguläres Label als Dateninformation, es liegt also Betriebsart "Ereignissteuerung" vor. Die Logik (333c) bringt deshalb den Umschalter S in die in Fig. 2 links gezeichnete, gestrichelte Stellung. Sobald der Beitrag ausgesendet wird, entspricht das in der Datenzeile mitausgesendete Label dem gespeicherten Sollwert und der Gleichheitsausgang 344 des Vergleichers steuert für die Dauer dieser Identität den Recorder 4 auf Aufzeichnung.(Auch z. B. im Falle einer Überziehung bleibt das Label entsprechend der Beitragsdauer länger präsent und die Aufzeichnung wird vollständig ausgeführt).

### Erster Sonderfall: "Ausfall des eingespeicherten Beitrags"

Trotz der Grundbetriebsart Ereignissteuerung erscheint in diesem Fall im Fernsehsignal kein reguläres Label sondern das Pseudolabel A. Die dementsprechend decodierte Ausfallerkennungsinformation liegt am Datendecoderausgang 323 an und sperrt über die Logik (333b) die Aufzeichnungssteuerung des Recorders 4 über die Ausgangsleitung 36 der Auswerteeinrichtung 3.

### Zweiter Sonderfall: "Einspeicherung und Aufzeichnen eines an Stelle eines erstangekündigten, ausgefallenen Beitrags gesendeten Ersatzbeitrages"

War wegen einer nachträglichen Ankündigung eines Beitrages als Austausch für einen schon zuvor angekündigten anderen Beitrag im Strichcode 51 das Austauschkennbit gesetzt und wurde in den Speicher 310 eingelesen, so liegt es nun am Ausgang 312 des Sollspeichers 310 als solches an. In diesem Fall wird über die Logik 333c und 333b trotz Vorliegen der Grundbetriebsart "Ereignissteuerung" des weiteren der oben beschriebene Funktionsablauf "Zeitsteuerung" ausgelöst.

Das hier beschriebene Ausführungsbeispiel läßt sich natürlich in mehreren Punkten mit alternativen Elementen realisieren. So könnte z. B. für die anzukündigenden und einzugebenden Sollwertinformationen statt des beschriebenen optischen ein magnetischer Informationsträger verwendet oder eine spezielle Datenübernahme aus einer entsprechend modifizierten Texttafel des im Fernsehsignal ebenfalls übertragbaren Videotextsystems vorgesehen werden.

Statt eines Speichers 310 mit einer Mehrzahl (311, 312, 313, 314) von Ausgängen wie er in Fig. 2 der besseren Anschaulichkeit wegen dargestellt ist, wird man in einem Microprozessorsystem z. B. einen einzigen Ausgang (Port) mit entsprechendem Adressier- und Multiplexverfahren (Bus) verwenden.

### Patentansprüche

1. Einrichtung zum zeit- oder ereignisgesteuerten Aufzeichnen von Fernsehprogrammsignalen wobei das Zeitdatum des vorgesehenen Beginns eines Fernsehprogrammbeitrages einerseits als Sollwert z. B. in Form eines optisch lesbaren Strichcodes (51) aus einem Programmankündigungsmedium (5) entnehmbar und in eine Speichereinrichtung (310) einlesbar ist und andererseits in einer ersten, zeitgesteuerten Betriebsart als ein dynamischer Istwert (Ausgang 351) aus einer Realzeit-Kalenderuhr (350) verfügbar ist oder in einer zweiten, ereignisgesteuerten Betriebsart als ein für die Dauer eines Beitrags statischer Istwert (321) aus dem den Beitrag beinhaltenden empfangenen Fernsehsignal (32) entnehmbar ist, dadurch gekennzeichnet, daß in die Speichereinrichtung (310) ein den Austausch eines früher angekündigten Programmbeitrages gegen einen anderen, später angekündigten Programmbeitrag kennzeichnendes Austauschkennungsbit aus dem die spätere Ankündigung enthaltenden Programmankündigungsmedium zusammen mit dem Zeitdatums-Sollwert einspeicherbar ist und daß eine in der Einrichtung (310) enthaltene Auswerteeinrichtung (3) so ausgebildet ist, daß bei Vorliegen der ereignisgesteuerten Betriebsart,

a) wenn zu einem abgespeicherten Zeitdatums-Sollwert kein Austauschkennungsbit mit abgespeichert ist und dem Fernsehsignal anstelle des Zeitdatums ein Ausfallerkennungssignal entnommen wird, eine Aufzeichnung unterbleibt, und,

b) wenn ein Austauschkennungsbit zusammen mit dem Zeitdatums-Sollwert abgespeichert ist, anstelle der ereignisgesteuerten eine zeitgesteuerte, von dem Zeitvergleich zwischen dem Zeitdatums-Sollwert und dem aus der Kalenderuhr (350) verfügbaren Zeitdatums-Istwert abgeleitete Aufzeichung erfolgt.

### Claim

1. A device for time or event controlled recording of television programme signals, whereby the date of the scheduled start of a television programme item, on the one side, can be taken as reference value, e.g. in the form of a visually legible bar code (51) from a programme announcement medium (5) and read into a storage device (310) and, on the other side, in a first time-controlled operational mode, is available as a dynamic actual value (outlet 351) from a real-time calendar clock (350) or, in a second event-controlled operational mode, can be taken from the television signal (32) containing the item as actual value (321) static for the duration of the item, characterized in that, into the storage device (310) an exchange flag bit can be written marking the exchange of a previously announced programme item for another subsequently announced programme item and taken from the programme announcement medium containing the later announcement together with the date reference value and that an evaluation device (3) contained in the device (310) is formed such that, in case of event-controlled operational mode,

a) recording does not take place, if at a stored reference-value date no exchange flag bit has been equally stored, and if instead of the date a drop-out identification signal is drawn from the television signal, and,

b) time-controlled recording instead of event-controlled recording takes place, which results from the comparison between the reference-value date and the actual-value date obtained from the calendar clock (350), if an exchange flag bit is stored together with the reference-value date.

**Revendication**

1. Dispositif pour l'enregistrement à commande par horloge ou par événement de signaux de télévision, la date du début prévu pour un insert de programme de télévision, d'une part, étant prélevable d'un moyen d'annonce de programme (5) comme valeur prescrite, p.ex. en forme d'un code à traits (51) visuellement lisible et mémorisable dans un dispositif de mémorisation (310), et, d'autre part, étant disponible, dans un premier mode opératoire à commande par horloge, comme valeur effective dynamique (sortie 351) résultant d'un horloge calendrier en temps réel (350) ou, dans un second mode opératoire à commande par événement, étant prélevable comme valeur effective (321) statique pendant la durée de l'insert du signal de télévision (32) reçu contenant l'insert, caractérisé en ce que dans le dispositif de mémorisation (310) peut être mémorisé un bit identificateur d'échange caractérisant l'échange d'un insert de programme préalablement annoncé contre un autre insert de programme plus tard annoncé, en le prélevant du moyen d'annonce de programme contenant l'annonce postérieure, mémorisable en même temps avec la valeur prescrite de la date, et qu'un dispositif d'analyse (3) contenu dans le dispositif (310) est formé tel qu'en présence du mode opératoire à commande par événement

a) l'enregistrement est supprimé, si aucun bit identificateur d'échange a été mémorisé en même temps avec la valeur prescrite de la date, et si, au lieu de la date, un signal identificateur de suppression a été prélevé du signal de télévision, et

b) un enregistrement à commande par horloge a lieu, dérivant de la comparaison de temps entre la valeur prescrite de la date et la valeur effective de la date disponible de l'horloge calendrier (350), au lieu de l'enregistrement commandé par événement, si un bit identificateur d'échange a été mémorisé conjointement à la valeur prescrite de la date.

| | Vorgeschichte der Programmankündigung(en) | Austausch-kennungsbit im Ankündigungsmedium gesetzt | Ausfall-erkennungssignal im Fernsehsignal vorhanden | Recorderfunktion |
|---|---|---|---|---|
| I | normal, keine Änderung | nein | nein | ereignisgesteuerte Aufzeichnung |
| II | erstangekündigter Beitrag entfällt bzw. wird ohne Vorankündigung durch einen anderen ersetzt | nein | Ja | keine Aufzeichnung |
| III | erstangekündigter Beitrag entfällt, wird aber durch einen neuen, nachträglich ebenfalls angekündigten Beitrag ersetzt | Ja | Ja | IIIA wenn nur Erstankündigung gespeichert: keine Aufzeichnung (≙ II) <br> IIIB wenn Neuankündigung gespeichert: zeitgesteuerte Aufzeichnung |

Fig.1

0 122 626

# Fig.2

Sollspeicher

| Progr.-quelle | Zeitdatums-Sollwert | Ausf.-kennbit | Dauer |

Vergleicher

Tuner

De-mod.

Daten-decoder

Vergleicher

Label

Betriebsart

Realzeit

Ausfallerkennungsinform.

Video  Ton

0 122 626